(19) **Europäisches Patentamt / European Patent Office / Office européen des brevets**

(11) **EP 4 782 363 A1**

(12) **EUROPEAN PATENT APPLICATION**

(43) Date of publication:
29.07.2026 Bulletin 2026/31

(21) Application number: 25382045.0

(22) Date of filing: **24.01.2025**

(51) International Patent Classification (IPC):
**B65F 3/00** (2006.01)　　**F16P 3/14** (2006.01)

(52) Cooperative Patent Classification (CPC):
**B65F 3/00; F16P 3/147**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ros Roca, S.A.U**
**25300 Tàrrega (ES)**

(72) Inventors:
- **SORIANO ALFONSO, Francisco**
**25300 TÀRREGA (ES)**
- **BERGADÀ VIDAL, Joan**
**25300 TÀRREGA (ES)**

(74) Representative: **Arnold & Siedsma**
**Bezuidenhoutseweg 57**
**2594 AC The Hague (NL)**

Remarks:
Amended claims in accordance with Rule 137(2) EPC.

(54) **GARBAGE COLLECTING SECURITY CONTROL SYSTEM AND METHOD THEREFOR**

(57) The garbage collecting security control system comprises an operator antenna ($P_0$) associated with an operator (O), vehicles antennas (Pi, $P_2$, ... $P_n$) in a refuse collecting vehicle (V), a control unit for determining antenna positions ($x_0$, $y_0$, $z_0$; $x_1$, $y_1$, $z_1$; $x_2$, $y_2$, $z_2$; ... $x_n$, $y_n$, $z_n$), a critical region (A) defined by vehicle antenna positions ($x_1$, $y_1$, $z_1$; $x_2$, $y_2$, $z_2$; ... $x_n$, $y_n$, $z_n$), and for determining an action based on the operator antenna position depending on a distance (d) from the operator antenna ($P_0$) to a line (i) passing through vehicle antenna positions ($x_1$, $y_1$, $z_1$; $x_2$, $y_2$, $z_2$; ... $x_n$, $y_n$, $z_n$) and/or a distance ($D_1$, $D_2$, ... $D_n$) from the operator antenna ($P_0$) to the vehicle antennas ($P_1$, $P_2$, ... $P_n$).

FIG. 1

EP 4 782 363 A1

## Description

### FIELD OF THE INVENTION

The present disclosure relates to systems for controlling security, in particular in garbage collection, for example where garbage trucks are involved. The present disclosure also relates to methods for controlling security with advantageous applications in the field of waste collection.

### BACKGROUND

There are many situations where an operator, worker, or any person is exposed to danger. One of such situations is collecting waste, that is, garbage or refuse, in which an operator usually works in the vicinity of moving parts of a garbage truck such as, for example, lifting mechanisms for handling and lifting trash containers, compactors for compressing trash, hydraulic mechanisms in general, etc.

In view of the potential danger to which the operator is exposed during work in garbage collection, it is important to constantly monitor the positional relationship between the operator and machinery that is or may be in operation there around.

Devices providing for operator positional relationship between an operator and a vehicle such as garbage truck have been proposed in which emitters and receivers are associated with the operator and the machinery. For example, cameras have been used in the waste collection environment, mounted on the vehicle for identifying operator unsafe situations, such as standing too close to the vehicle while it is in motion or an operator entering a blind spot.

Other types of devices than cameras have been also proposed in the art. For example, JP2007204276A provides for the use of infrared light for detecting that an operator enters an unsafe area in which case the operation of the machinery is disabled. Infrared sensors are employed in WO2023106435A1 and WO2023106436A1 for identifying an operator entering an unsafe area. Such sensors emit infrared rays into the operator entering the unsafe or safe area so that reflected infrared rays are recognized and a 3D position is detected where the operator is detected within the unsafe or safe area.

Other known solutions are based in the art based on the intensity of a signal from a transmitter such that when a predetermined value has been reached the operation of a refuse loading device is stopped, as disclosed for example in JP2005314059A.

The above systems have been shown to be inefficient. IR sensors do not have a high transmission rate and are affected by changes in weather, temperature and humidity, and environments with fog, rain, dust, smoke, daylight, ambient light, sunlight and other light sources, can interfere their operation.

In JP2021050061A, a signal transmitter is disposed in an operator and a signal receiver is disposed in a garbage input box. A distance is determined as an intensity of a radio wave from signal transmitter or receiver. An angle is determined from signals transmitted or received by antennas, using a signal transmitter arranged at an angle such that when a radio wave is received a path difference is created which appears as a delay of the received signal. Said angle is calculated from the delay of the radio wave and a control unit determines whether or not the measured values are within the threshold range or detection area for controlling the stop or actuation of a garbage loading device.

The above system has been shown to be still inaccurate for ensuring operator safety. Garbage collection trucks are usually subjected to severe operations which involve shocks, hits and impacts due to, for example, collecting non-standard containers, handling damaged containers, collisions of the vehicle with posts, branches, walls, etc. while the vehicle is moving forward, or other occurrences such as hard waste falling over vehicle devices. Although the refuse collection vehicles are designed to operate under such conditions, deformations in equipment and structures of the vehicle occur over time. The above mentioned known angle-based measurement systems are very sensitive to such deformations such that a twist of the order of millimeters in an emitter or receiver inevitably results in magnified errors which are greater as the distance is increased. This severely limits the application of such known angle-based measurement systems.

Antenna based devices have been also proposed for determining when an operator is in a predetermined area. For example, in JP2020011840A and JP2005067746A antenna devices are used for emitting and receiving radio waves such that when an operator is detected to be in a predetermined area, a signal is output to a processing unit for controlling the machinery, for example, for disabling the operation thereof.

Such prior art antenna based devices detect the position of an operator depending on the signal coverage, that is, depending on whether or not signals are received and thus according to the communication in a given region

Although known camera-based, sensor-based, and antenna-based solutions offer a significant improvement in operator safety in the waste collection industry, a need still remains for security control systems in particular in the field of garbage collection which are more accurate and efficient.

### SUMMARY

The present garbage collecting security control system that will be described in the following has been found to improve the prior art security control systems while still providing additional advantages as it will be described further below.

The present garbage collecting security control system comprises at least one operator antenna to be associated with an operator. The operator antenna may be provided, for example, in one or more of an upper half of the operator's body, an operator's helmet, an operator's cap, an operator's hair band, an operator's vest, an article of clothing, an operator's harness, an operator's glove, an operator's bracelet, and an operator's necklace. The operator antenna may be referred herein to as a tag to be worn by a person, that is, the operator.

At least one vehicle antenna is also included capable of communicating with the operator antenna. The vehicle antenna is intended to be provided in a refuse collecting vehicle such as a refuse collecting truck. Examples of locations where the vehicle antenna may be mounted may be one or more of the refuse collecting vehicle cab, the refuse collecting vehicle body, the refuse collecting vehicle tailgate, etc. Other suitable parts of the refuse collecting vehicle are possible for mounting the vehicle antenna.

The number of vehicle antennas to be mounted in the vehicle may depend on the signal quality. In general, the larger the number of vehicle antennas the better signal quality. In any case, if it is determined that antenna signals have not enough quality, then the operator may be considered to be at an unsafe position, as a security measure.

The number of vehicle antennas to be mounted in the vehicle may also depend on the desired geometry of a critical region defined by at least one position of at least one vehicle antenna.

Within the meaning of the present disclosure, a critical region refers to any virtual region in space, such as a two-dimensional region, i.e. a critical surface, or a three-dimensional region, i.e. a critical volume, that is defined by at least one position of at least one vehicle antenna for establishing an operator's safety condition. When a three-dimensional region (critical volume) is involved, a two-dimensional region (critical surface) can be obtained from said critical volume by projecting it onto a plane, e.g. the ground, for example.

Any critical region may be created, for example, within and/or around the vehicle. One or a number of critical regions may be defined in one garbage collecting security control system. If a number of critical regions are defined, they may be all the same or they may be different from each other.

For example, if one vehicle antenna is used, a critical region may be spherical, if two vehicle antennas are used, a critical region may be two spheres, one cylinder, or two spherical caskets, for example. If three or more vehicle antennas are used, a critical region may be , for example, prisms, spheres, pyramids, cylinders and any intersection of the above elements. As stated above, polygonal, e.g. rectangular, triangular, etc. critical surfaces may be also defined by at least one position of at least one vehicle antenna, for establishing an operator's safety condition.

A preferred type of antenna used as at least one of the operator antenna and the vehicle antenna is an ultra-wideband (UWV) antenna. This provides high accuracy in distance measurement for precise positioning of the operator with respect to the vehicle. In other examples, the vehicle antenna may include at least one of a laser sensor, a LED sensor, a LIDAR sensor, an infrared sensor, and an ultrasound sensor.

Furthermore, the use of UWB radio technology improves the performance of the present system and method over external factors such as varying weather conditions, signal interference, location of the antennas, etc. Factors such as plastic, wood and paper objects, obstacles, etc. which are frequent in a garbage collector do not interfere with signal transmission enhancing overall system performance.

The present garbage collecting security control system further comprises at least one control unit to be connected to the operator antenna and the vehicle antenna. The control unit is configured for at least determining the following:

- at least one position in space of the operator antenna with respect to a position in space of the vehicle antenna;
- a critical region in space defined by said position of the vehicle antenna; and
- at least one action to be performed based on the relative position of the operator antenna with respect to the critical region.

In one example, the critical region may be a two or three dimensional region in space considered to be unsafe when the operator in said region is under poor visibility conditions. In a further example, the critical region may be a two- or three-dimensional region in space considered to be safe within a vehicle cab. In the case in which the critical region is the vehicle cab, the critical region may be established as a mandatory area where the operator must remain during a given period of time, for example, while one or more devices, mechanisms, etc., in the garbage collection vehicle, are still in operation which could be considered to be an unsafe situation for the operator. Other examples of unsafe and safe critical regions are possible, even warning critical regions where the operator is warned about possible danger.

As stated above, the control unit is configured to determine one or more actions to be performed depending on the relative position of the operator antenna with respect to the critical region. Determining said one or more actions to be performed is based on at least one of the following distances:

- a distance from a position in space of the operator antenna to at least one line passing through positions in space of the vehicle antenna, that is, a length of a line from the operator's tag perpendicular to said line passing through positions in space of the vehicle antennas; and

- a distance from the position in space of the operator antenna to at least one of said positions in space of the vehicle antenna.

The case is also envisaged that, based on the above distances, the control unit could determine that no actions must be performed.

The control unit may determine that at least one action must be performed when it is considered that the operator antenna is at least in part within the critical region defined by a position of the vehicle antenna.

Examples of actions to be performed are one or more of outputting at least one command for enabling or disabling at least one mechanism in the refuse collecting vehicle, and outputting at least one signal informing that the operator must remain within or move away from the critical region.

At least one of the above mentioned distances, that is, a distance from a position in space of the operator antenna to at least one line passing through positions in space of the vehicle antenna, and a distance from the position in space of the operator antenna to at least one of said positions in space of the vehicle antenna, may be measured, for example, through at least one of ToF (Time of Flight), TDOA/TOA (Time Difference of Arrival / Time of Arrival) and TWR (Two Way Ranging).

The present disclosure also relates to a method for controlling security in garbage collection through the system described above.

The method comprises providing at least one operator antenna to an operator, for example, to an upper half of the operator's body, to an operator's helmet, to an operator's cap, to an operator's hair band, to an operator's vest, to an article of clothing, to an operator's harness, to an operator's glove, to an operator's bracelet, to an operator's necklace, etc. The operator antenna may be referred herein to as a tag to be worn by the operator.

The method further comprises providing at least one vehicle antenna in a refuse collecting vehicle, for example a refuse collecting vehicle cab, a refuse collecting vehicle body, a refuse collecting vehicle tailgate, etc. Other suitable parts of the refuse collecting vehicle are possible for mounting the vehicle antenna.

At least one position in space of the operator antenna and at least one position in space of at least one corresponding vehicle antenna are determined. A critical region defined by the position in space of the vehicle antenna is also determined.

As stated above, a critical region is to be conceptually understood herein as a virtual two- or three-dimensional region, i.e. a critical surface or a critical volume, defined within and/or around the vehicle by at least one position of at least one vehicle antenna for establishing an operator's safety condition.

Based on the above, that is, the relative position of the operator antenna with respect to the critical region, at least one action to be performed is determined. In particular, said action to be performed is based on at least one of a distance from a position in space of the operator antenna to at least one line passing through positions in space of the vehicle antenna, and a distance from the position in space of the operator antenna to at least one of said positions in space of the vehicle antenna.

One example of determining an action to be performed is when it is considered that the operator antenna is at least in part within the critical region. Other cases are also envisaged such as for example when the operator antenna is at a given distance away from the critical region.

Examples of actions to be performed may include one or more of the following:

- outputting at least one command for enabling/disabling at least one mechanism in the refuse collecting vehicle when it is determined that the operator antenna is at a safe/unsafe position with respect to a critical surface or volume, respectively;
- outputting at least one command for enabling/preventing the vehicle from travelling forward and/or backwards, for example, disengaging/engaging the vehicle's brakes when it is determined that the operator antenna is at a safe/unsafe position with respect to the critical surface or volume, respectively;
- outputting at least one command for enabling/disabling at least one mechanism in the refuse collecting vehicle when it is determined that the operator antenna is at a safe/unsafe position with respect to the critical surface or volume, respectively;
- outputting at least one command informing the operator to remain within the critical surface or volume when it is determined to be safe, or to move away from the critical surface or volume when it is determined to be unsafe;
- outputting at least one of an acoustic and/or visual and/or haptic warning signal so that the operator is aware of a given situation;
- outputting at least one command to drive a given mechanism in the refuse collecting vehicle at a rated speed or at slower speed, when it is determined that the operator antenna is at a safe/unsafe position with respect to the critical surface or volume, respectively;
- outputting at least one command for enabling, disabling, or modifying vehicle operating modes;
- outputting at least one command for modifying machine operating parameters depending on the operator's position.
- recording operator's positions and estimating the frequency of the presence in safe and unsafe regions;
- generating reports based on said recorded operator's positions;
- making analysis of the report to correct positions, which analysis may be AI based;

- changing the color of a warning sign depending on the operator's condition for operator training purposes, etc.

Examples of mechanisms in the refuse collecting vehicle that may be controlled, such as enabled, disabled, or its operation changed, are lifting mechanisms for handling and lifting trash containers, compactors for compressing trash, hydraulic mechanisms in general, etc.

The step of determining at least one position in space of the operator antenna with respect to a position in space of the vehicle antenna may be advantageously based on a prediction of a position of the operator antenna. This is determined through recursive estimates of operator's positions in space at different time intervals. For example, recursive estimates of operator's positions in space may be made at different time intervals through a trend filtering method.

One example of trend filtering method is the Kalman filtering forecasting method where a vector containing the variables to track such as position and velocity of the operator antenna is defined. A matrix that describes how the state changes over time (e.g., how operator velocity affects a position of the operator antenna) is also defined together with a matrix that relates the state to antenna measurements. This filter is initialized by setting an initial state estimate and initial error covariance matrix to establish how uncertain is initial state. A process noise covariance is defined to set uncertainty in the state transition model. A measurement noise covariance is also defined to determine uncertainty in the antenna measurements. This is implemented by predicting a next state using said state transition model and predicting the error covariance of the predicted state. A measurement step is performed to obtain the actual measurement from the operator antenna and a Kalman gain is calculated to determine how much to weight the measurement versus said prediction. The state estimate is updated using the Kalman gain, and the measurement and the error covariance of the updated state is also updated. Prediction and measurement steps are continuously performed as new measurements become available.

A further example of trend filtering method is the particle filter in which a set of particles with initial positions and weights is created and for each particle a motion model is used to predict its next state. Then a measurement of the operator antenna is obtained and, for each particle, the likelihood of the measurement given the particle's predicted state is calculated. The particle's weight is updated based on the likelihood; a resampling step is performed creating a new set of particles by sampling from the existing set of particles with probabilities proportional to their weights. Finally, an estimation is obtained by calculating the estimated state by averaging the positions of all particles or using a weighted average.

A moving average filter may may be used. It allows noisy position data to be smoothed out by averaging the positions over a specific window of time to reduce the impact of sudden, temporary fluctuations. This method is performed by defining a window size, such as, for example, the last n position measurements, and for each new position measurement, the average of the positions within the window is calculated. The average position becomes the filtered, i.e. smoothed, position and the window is then moved forward to include the new measurement and exclude the oldest measurement.

Other algorithms and trend filtering methods are not ruled out. For example, machine learning models may be used to make predictions about where the operator antenna will be in the future, and therefore to define actions to be taken.

For example, based on a predicted position of the operator with respect to the critical region defined by vehicle antennas, if it is determined that the operator will get too close or enter at least partially within said critical region, for example, where it is considered that the operator is under unsafe conditions, such as near moving parts or in vehicle's blind spots, a warning sign and/or a vibration in the operator antenna and/or an audible alarm in the vehicle and/or a warning light in the vehicle cab is output and/or at least one action is automatically performed such as for example one or more of disabling at least one mechanism in the refuse collecting vehicle, engaging the vehicle's brakes, preventing a vehicle loading mechanism from operating, etc.

As stated above, the present system and method are based on controlling the operator depending on a single parameter, that is, the distance from the relative position of the operator with respect to a critical region defined by one or more vehicle antennas. Such distance-based control is carried out very precisely and reliably resulting in a high effectiveness. Since said distance-based radio technology control of the present system and method depend only on a single variable, there is less risk of calculation errors. The single variable, i.e. the distance, may be measured through a number of different devices such that statistics can be obtained in order to make corrections where required.

Furthermore, the radio technology allows the performance of the present system and method to be improved over external factors such as varying weather conditions, signal interference, location of the antennas, etc.

With the present system and method described above the operator antenna and the vehicle antenna do not need to directly look at each other, but there is always operative effectiveness even under poor environmental conditions such as dust, smoke etc., as opposed to known angle based measuring systems where the operator antenna and the vehicle antenna are required to directly look at each other.

The present system and method greatly help to prevent accidents by providing real-time warnings to operators and drivers.

## BRIEF DESCRIPTION OF THE DRAWINGS

Non-limiting examples of the present disclosure will be described in the following, with reference to the appended drawings, in which:

Figure 1 is a perspective that diagrammatically shows one example of the present garbage collecting security control system where a rear portion of a garbage collecting truck and a garbage collecting operator are shown;
Figure 2 is a graphical view of the present garbage collecting security control system to show one example for calculating a relative position of an operator antenna with respect to a critical surface, in particular with respect to a line passing through the position of the vehicle antennas and;
Figure 3 a diagrammatic top view of a garbage collecting truck with different critical regions defined therein.

## DETAILED DESCRIPTION OF EXAMPLES

Referring to the example shown in the figures of the drawings, the garbage collecting security control system 100 comprises at least one operator's tag $P_0$ that is attached to an operator O. In the non-limiting example shown, the operator's tag $P_0$ is provided in an operator's vest, although many other suitable locations are possible such as in any article of clothing, an operator's harness, an operator's glove, an operator's bracelet, an operator's necklace.

The garbage collecting truck V includes two vehicle antennas $P_1$, $P_2$ capable of communicating with the operator's tag $P_0$. The vehicle antennas $P_1$, $P_2$ in the example shown in the figures of the drawings are arranged at an upper portion of the truck tailgate $V_t$. Other suitable locations in the garbage collecting truck V where the vehicle antennas $P_1$, $P_2$ may be arranged are not ruled out such as the truck cab, the truck body, etc.

Although in the example of the present garbage collecting security control system two vehicle antennas $P_1$, $P_2$ are provided, more than two vehicle antennas $P_1$, $P_2$ may be used. The number of vehicle antennas $P_1$, $P_2$, $P_n$ to be mounted in the truck V may depend on the signal quality. For a better signal quality, a larger number of vehicle antennas $P_1$, $P_2$, $P_n$ may be used. The operator O is considered to be in an unsafe position when it is determined that antenna signals have not enough quality, as a security measure. Alternatively, or in addition, the number of vehicle antennas $P_1$, $P_2$, $P_n$ to be mounted in the truck V may depend on a desired geometry of a critical volume A defined by the vehicle antennas $P_1$, $P_2$, $P_n$ as it will be described further below.

The critical region A is any virtual two- or three-dimensional space defined within and/or around the truck V by positions in space $(x_1, y_1, z_1)$, $(x_2, y_2, z_2)$ of the vehicle antennas $P_1$, $P_2$ for determining whether an operator O is under a safe or unsafe condition.

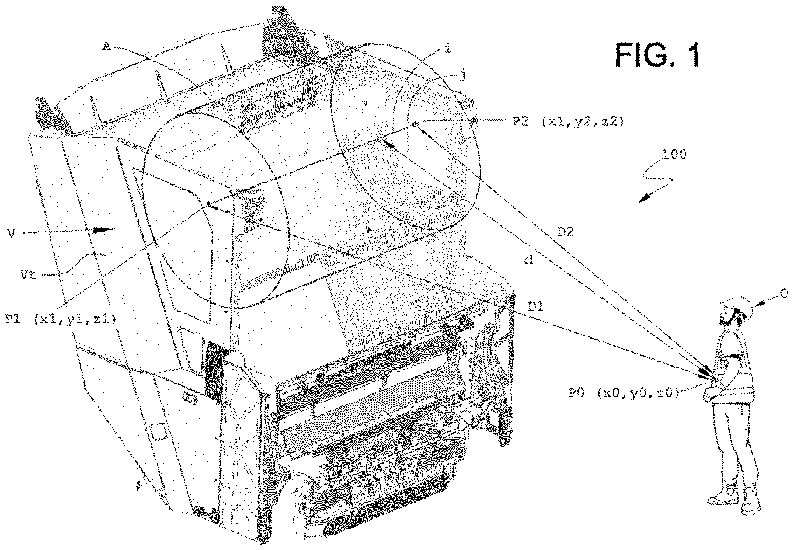

In the example of figure 1, two vehicle antennas $P_1$, $P_2$ are provided whose respective positions in space $(x_1, y_1, z_1)$, $(x_2, y_2, z_2)$ define critical region A which in this case is a cylindrical critical volume A can be defined as shown in figure 1. Other different geometries may be however obtained with the same or different number of vehicle antennas $P_1$, $P_2$, $P_n$ such as for example spheres, spherical caskets, prisms, pyramids, and any intersection thereof.

In the example shown, an unsafe situation is considered when the operator's tag $P_0$ and thus the operator O is at least in part within the cylindrical critical volume A or at a distance away therefrom. However, other criteria may be considered such as for example when the operation O is under poor visibility conditions.

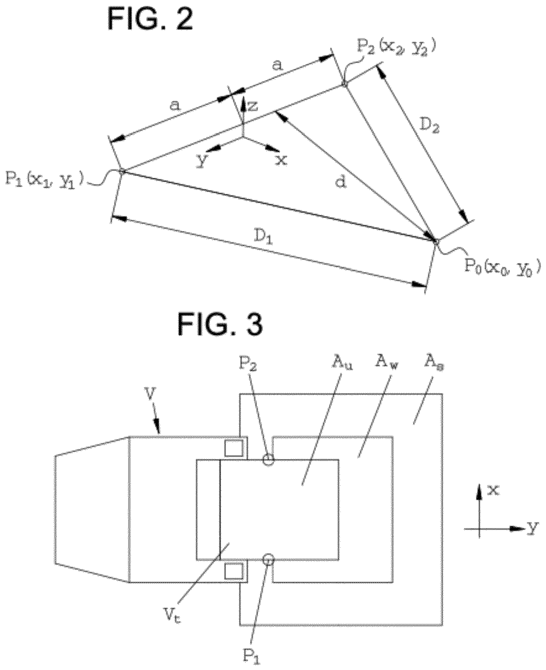

A number of vehicle antennas $P_1$, $P_2$, $P_n$ may be used to define a number of different critical volumes A. Figure 3 shows a case where three different critical volumes A have been depicted, corresponding to three different operator working areas. Specifically, a first critical volume is shown in figure 3 which is referred herein to as unsafe critical volume A, which is located in the truck tailgate $V_t$ where a waste compactor is provided. A second critical volume is shown in figure 3 which is referred herein to as safe critical volume $A_s$, corresponding in this case to a region away from the unsafe critical volume $A_u$. A third critical volume is shown in figure 3 is referred herein to as warning critical volume $A_w$, corresponding in this case to a region near the unsafe critical volume A, where the operator O is warned about possible danger. The warning critical volume $A_w$ may be considered depending on the distance from the operator's tag $P_0$ and the unsafe critical volume $A_u$.

In the non-limiting example shown, both the operator's tag $P_0$ and the vehicle antenna $P_1$, $P_2$, $P_n$ are ultra-wideband (UWV) antennas. As a result, distance measurements are obtained with high accuracy for precise positioning of the operator O with respect to the truck V. However, other types of antennas may be used, or they may include at least one of a laser sensor, a LED sensor, a LIDAR sensor, an infrared sensor, and an ultrasound sensor.

A control unit, not shown, is provided. The control unit may be provided, for example, in the truck V although other places such as for example remote from the truck V are possible. The control unit is connected to both the operator's tag $P_0$ and the vehicle antennas $P_1$, $P_2$, $P_n$ in the present garbage collecting security control system 100.

The control unit is configured for determining at least one position in space $(x_0, y_0, z_0)$ of the operator's tag $P_0$ with respect to a position in space $(x_1, y_1, z_1)$, $(x_2, y_2, z_2)$ of each vehicle antenna $P_1$, $P_2$.

The control unit is also configured for determining a critical region A. As stated above, the critical region A is a virtual two- or three-dimensional space defined by the position in space $(x_1, y_1, z_1)$ of one vehicle antenna $P_1$

and the position in space $(x_2, y_2, z_2)$ of the other vehicle antenna $P_2$ for establishing an operator's safety condition.

The control unit is also configured for determining one or more actions to be performed. Said one or more actions are based on the relative position in space $(x_0, y_0, z_0)$ of the operator's tag $P_0$ with respect to the critical region A defined by said positions in space $(x_1, y_1, z_1)$, $(x_2, y_2, z_2)$ of the vehicle antennas $P_1$, $P_2$.

Said one or more actions to be performed depending on the relative position of the operator's tag $P_0$ with respect to the critical region A are based, according to the present system and method, on distances d, $D_1$, $D_2$, ... $D_n$.

One of said distances d may be defined from a position in space $(x_0, y_0, z_0)$ of the operator's tag $P_0$ to a line i passing through the position $(x_1, y_1, z_1)$ of the vehicle antenna $P_1$ and the position $(x_2, y_2, z_2)$ of the vehicle antenna $P_2$. Said distance d thus corresponds to a length of a line j from the operator's tag $P_0$ perpendicular to said line i passing through positions $(x_1, y_1, z_1)$, $(x_2, y_2, z_2)$ of the vehicle antennas $P_1$, $P_2$.

Other distances $D_1$, $D_2$, ... $D_n$ may be used for determining that one more actions should be performed. Said distances $D_1$, $D_2$, ... $D_n$ may be defined from the position in space $(x_0, y_0, z_0)$ of the operator's tag $P_0$ to the position in space $(x_1, y_1, z_1)$, $(x_2, y_2, z_2)$, $(x_n, y_n, z_n)$ of each vehicle antenna $P_1$, $P_2$, $P_n$.

Referring now to figure 2 of the drawings, with the positions of the two vehicle antennas $P_1$, $P_2$ being known and being given as respective projections in a plane xy according to coordinates $(x_1, y_1)$ and $(x_2, y_2)$, the respective known distances $D_1$, $D_2$ from the operator's tag $P_0$ to each vehicle antenna $P_1$, $P_2$ may be determined. This is carried out through at least one of ToF (Time of Flight), TDOA/TOA (Time Difference of Arrival / Time of Arrival) and TWR (Two Way Ranging).

The relative position of the operator's tag $P_0$ with respect to the critical region A can be then determined. For this purpose, the position in space $(x_0, y_0)$ of the operator's tag $P_0$ at a moment in time is calculated through said distances $D_i$, $D_2$ from the operator's tag $P_0$ to each vehicle antenna $P_1$, $P_2$ as follows:

$$x_0 = \frac{D_1^2 - D_2^2}{4a}, \qquad y_0 = \sqrt{D_2^2 - (x - a)^2}$$

wherein a is the specific value of the respective position $(x_1, y_1; x_2, y_2)$ of the vehicle antennas $P_1$, $P_2$ such that $(x_1, y_1) = (-a, 0)$ and $(x_2, y_2) = (a, 0)$. In this specific non-limiting example illustrated in figure 2 of the drawings, the critical region is a two-dimensional region A, i.e. a critical surface, that is defined by the positions $(x_1, y_1; x_2, y_2)$ where the vehicle antennas $P_1$, $P_2$ are located in the truck V.

Examples of actions to be performed are one or more of outputting at least one command for enabling or disabling at least one mechanism in the refuse collecting truck V; and outputting at least one signal informing that operator O must remain within or move away from the critical region A.

Referring to figure 3, the control unit may for example determine that a container lifting mechanism of the refuse collecting truck V can be driven upwards and/or downwards as required when at least one portion of the operator O is present in the safe critical region $A_s$. In a further example, the control unit may determine that the container lifting mechanism can only be driven upwards as required when at least one portion of the operator O is present in the warning critical region $A_w$. Still in another example, the control unit may determine that the container lifting mechanism is disabled when at least one portion of the operator O is present in the unsafe critical region $A_u$. Other actions can be taken when the operator O is present in the unsafe critical region A, such as disabling a container lifting mechanism, a waste compactor, etc.

The following method is provided herein for controlling security in garbage collection through the system 100 described above.

According to the present method, at least one operator antenna $P_0$ is provided to an operator O. The operator antenna $P_0$ will be referred hereinafter to as the operator's tag $P_0$. As stated above, the operator's tag $P_0$ is preferably provided to an upper half of the operator's body, or to an operator's helmet, cap, or hair band. In the example, the operator's tag $P_0$ is provided to a vest worn by the operator. Other locations such as articles of clothing, glove, bracelets, necklaces, etc. are not ruled out.

The method further comprises mounting vehicle antennas $P_1$, $P_2$ to a truck tailgate $V_t$ in a refuse collecting truck V, although other suitable parts of the refuse collecting truck V may be envisaged such as, for example, the truck cab. On the other hand, although in the present example two vehicle antennas $P_1$, $P_2$ are provided, the number of vehicle antennas $P_1$, $P_2$, $P_n$ may be different depending on the signal quality or the desired geometry of a critical region A to be generated there with. In the present example, two vehicle antennas $P_1$, $P_2$ are sufficient to provide a reliable system 100 creating a cylindrical critical region A.

The present method also comprises determining at least one position in space of the operator's tag $P_0$ and at least one position in space $(x_1, y_1, z_1)$ of one vehicle antenna $P_1$ and the position in space $(x_2, y_2, z_2)$ of the other vehicle antenna $P_2$. Based on said positions in space $(x_1, y_1, z_1)$, $(x_2, y_2, z_2)$ of the vehicle antennas $P_1$, $P_2$ the above mentioned cylindrical critical region A is defined.

The method then decides, through a control unit of the system 100 and based on the relative position $(x_1, y_1, z_1)$ of the operator's tag $P_0$ to the critical region A, if at least one action must be performed. Said action could be considered to be performed for example when it is considered that the operator's tag $P_0$ is at least in part within the critical region A or for example when the operator's tag $P_0$ is at a given distance away from the critical region A.

The action or actions to be performed may be based on a distance d from a position in space $(x_0, y_0, z_0)$ of the operator's tag $P_0$ to a line i passing through the position $(x_1, y_1, z_1)$ of the vehicle antenna $P_1$ and the position $(x_2, y_2, z_2)$ of the vehicle antenna $P_2$. Distance d corresponds to a length of a line j from the operator's tag $P_0$ perpendicular to said line i passing through positions $(x_1, y_1, z_1)$, $(x_2, y_2, z_2)$ of the vehicle antennas $P_1, P_2$.

Alternatively of in addition, said action or actions to be performed may be based on distances $D_1, D_2, ... D_n$ from the position in space $(x_0, y_0, z_0)$ of the operator's tag $P_0$ to the position in space $(x_1, y_1, z_1)$, $(x_2, y_2, z_2)$, $(x_n, y_n, z_n)$ of each vehicle antenna $P_1, P_2, P_n$.

It is to be noted that, according to the present method, no action could be determined by the control unit to be performed as a result of the above distances d, $D_1$, $D_2, ... D_n$.

Said distances d, $D_1, D_2, ... D_n$, may be measured, for example, through at least one of ToF (Time of Flight), TDOA/TOA (Time Difference of Arrival / Time of Arrival) and TWR (Two Way Ranging). Other means for measuring said distances d, $D_1, D_2, ... D_n$ may be used.

Actions to be performed depending on the relative position of the operator's tag $P_0$ with respect to the position in space $(x_1, y_1, z_1)$, $(x_2, y_2, z_2)$ of the vehicle antennas $P_1, P_2$ are, for example, one or more of the following:

- outputting at least one command for enabling at least one mechanism in the refuse collecting truck V when it is determined that the operator's tag $P_0$ is at a safe position with respect to the critical region A;
- outputting at least one command for disabling at least one mechanism in the refuse collecting truck V when it is determined that the operator's tag $P_0$ is at an unsafe position with respect to the critical region A;
- outputting at least one command for enabling or preventing the vehicle from travelling forward and/or backwards, for example, disengaging or engaging the vehicle's brakes, when it is determined that the operator's tag $P_0$ is at a safe/unsafe position, respectively, with respect to the critical region A;
- outputting at least one command for enabling or disabling at least one mechanism in the refuse collecting truck V, when it is determined that the operator's tag $P_0$ is at a safe/unsafe position, respectively, with respect to the critical region A;
- outputting at least one acoustic/visual/haptic signal informing the operator O to remain within the critical region A when it is determined that the operator's tag $P_0$ is at a safe position there within;
- outputting at least one acoustic/visual/haptic signal informing the operator O to move away a given distance from the critical region A when it is determined that the operator's tag $P_0$ is at an unsafe position there within;

- outputting at least one command for driving a given mechanism in the refuse collecting truck V faster or slower than a rated speed, when the operator O is in a safe or unsafe critical region, respectively;
- outputting at least one command for changing a warning sign color depending on the operator's condition for operator training purposes;
- outputting at least one command for enabling and/or disabling and/or modifying vehicle operating modes, such as automatic, semi-automatic, manual, etc.;
- outputting at least one command for modifying machine operating parameters depending on the operator's position;
- recording operator's positions and estimating the frequency of presence in safe and unsafe regions;
- generating reports based on recorded operator's positions; and
- making report analysis to correct operator's positions, which analysis may be AI based.

Examples of mechanisms in the refuse collecting truck V that may be controlled, such as enabled, disabled, or its operation changed, are lifting mechanisms for handling and lifting trash containers, compactors for compressing trash, hydraulic mechanisms in general, etc.

The step of determining at least one position in space of the operator's tag $P_0$ with respect to positions $(x_1, y_1, z_1)$, $(x_2, y_2, z_2)$ of the vehicle antennas $P_1, P_2$ may be advantageously based on predicting of a position of the operator's tag $P_0$. Said step of the present method may be based on a tendency of the operator's tag $P_0$ to be in predicted positions. This may be determined through recursive estimates of positions of the operator's tag $P_0$ at different time intervals $(t_{01}, t_{02}, t_{03}...t_{0n})$ through a trend filtering method. Non-limiting examples of trend filtering methods are Kalman filtering, particle filter, moving average filter, machine learning models, and any trend filtering methods suitable to make predictions about where the operator's tag $P_0$ will be in the future to define actions to be taken.

Although only a number of examples have been disclosed herein, other alternatives, modifications, uses and/or equivalents thereof are possible. For example, although in the description the positions in space of the operator antenna $P_0$ and the vehicle antenna $P_1, P_2, ... P_n$ have been respectively represented as points $(x_0, y_0, z_0)$ and $[(x_1, y_1, z_1), (x_2, y_2, z_2), ... (x_n, y_n, z_n)]$ in a cartesian coordinate system, said positions in space are not limited to said system and they could be represented in other coordinate systems, whether they are two-dimensional (2D) or three-dimensional (3D) spaces.

For example, the positions in space of the antennas $P_0, P_1, P_2, ... P_n$ may be represented in the polar coordinate system through the distance r of each antenna $P_0, P_1, P_2, ... P_n$ from a coordinate origin the angle $\theta$ from the x-axis. In this case, the relationship between polar and cartesian coordinates is $x = r \cdot \cos(\theta)$, $y = r \cdot \sin(\theta)$

for a two-dimensional (2D) space.

In a further example, the cylindrical coordinate system may be used for representing positions in space of the antennas $P_0, P_1, P_2, ... P_n$ as in the polar coordinate system but including a height value z along a z-axis in which case the conversion to the cartesian coordinates is $x = r \cdot \cos(\theta)$, $y = r \cdot \sin(\theta)$, $z = z$.

Also, the spherical coordinate system may be used defining said positions by the distance rfrom a coordinate origin, the azimuthal angle $\theta$ in the xy-plane, and the polar angle $\phi$ from the z-axis. In this case, the relationship to the artesian coordinates is $x = r \cdot \sin(\phi) \cdot \cos(\theta)$, $y = r \cdot \sin(\phi) \cdot \sin(\theta)$, $z = r \cdot \cos(\phi)$.

2D and 3D vectors may be also used for representing positions in space of the antennas $P_0, P_1, P_2, ... P_n$ from the origin of the coordinate system: $v = (x, y)$, $v = (x, y, z)$.

Parametric representation may also be used where said points $(x_0, y_0, z_0)$, $(x_1, y_1, z_1)$, $(x_2, y_2, z_2)$, ... $(x_n, y_n, z_n)$ can be represented in terms of a parameter, typically used for curves and surfaces. In 2D, a point P on a curve might be represented as $P(t)=(x(t),y(t))$, where $t$ is a parameter and in 3D, a point P on a surface might be represented as $P(u,v)=(x(u,v),y(u,v),z(u,v))$, where u and v are parameters.

All possible combinations of the described examples are also covered. Thus, the scope of the present disclosure should not be limited by particular examples but should be determined only by a fair reading of the claims that follow. If reference signs related to drawings are placed in parentheses in a claim, they are solely for attempting to increase the intelligibility of the claim and shall not be construed as limiting the scope of the claim.

**Claims**

1. A garbage collecting security control system (100), comprising:

   - at least one operator antenna ($P_0$) to be associated with an operator (O);
   - at least one vehicle antenna ($P_1, P_2, ... P_n$) to be provided in a refuse collecting vehicle (V) and which communicates with the operator antenna ($P_0$);
   - at least one control unit to be connected to the operator antenna ($P_0$) and the vehicle antenna ($Pi, P_2, ... P_n$) and configured for at least determining:

      - at least one position $(x_0, y_0, z_0)$ of the operator antenna ($P_0$) with respect to a position $[(x_1, y_1, z_1), (x_2, y_2, z_2), ... (x_n, y_n, z_n)]$ of the vehicle antenna ($Pi, P_2, ... P_n$);
      - a critical region (A) defined by said position $[(x_1, y_1, z_1), (x_2, y_2, z_2), ... (x_n, y_n, z_n)]$ of the vehicle antenna ($Pi, P_2, ... P_n$); and for

   - at least one action to be performed based on the relative position of the operator antenna ($P_0$) with respect to the critical region (A) based on at least one of:

      - a distance (d) from a position $(x_0, y_0, z_0)$ of the operator antenna ($P_0$) to at least one line (i) passing through positions $[(x_1, y_1, z_1), (x_2, y_2, z_2)... (x_n, y_n, z_n)]$ of the vehicle antenna ($Pi, P_2, ... P_n$); and
      - a distance $(Di, D_2, ... D_n)$ from the position $(x_0, y_0, z_0)$ of the operator antenna ($P_0$) to at least one of said positions $[(x_1, y_1, z_1), (x_2, y_2, z_2)... (x_n, y_n, z_n)]$ of the vehicle antenna ($Pi, P_2, ... P_n$).

2. The system (100) of claim 1, wherein said at least one action to be performed is determined when it is considered that the operator antenna ($P_0$) is at least in part within the critical region (A).

3. The system (100) of claim 1 o 2, wherein the action to be performed comprises one or more of:

   - outputting at least one command for enabling or disabling at least one mechanism in the refuse collecting vehicle (V), and
   - outputting at least one signal informing that operator (O) must remain within or move away from the critical region (A).

4. The system (100) of any preceding claim, wherein at least one of:

   - the distance (d) from a position $(x_0, y_0, z_0)$ of the operator antenna ($P_0$) to said line (i) passing through positions $[(x_1, y_1, z_1), (x_2, y_2, z_2)... (x_n, y_n, z_n)]$ of the vehicle antenna ($Pi, P_2, ... P_n$), and
   - the distance $(Di, D_2, ... D_n)$ from the position $(x_0, y_0, z_0)$ of the operator antenna ($P_0$) to at least one of said positions $[(x_1, y_1, z_1), (x_2, y_2, z_2)... (x_n, y_n, z_n)]$ of the vehicle antenna ($P_1, P_2, ... P_n$)

   is measured through at least one of ToF (Time of Flight), TDOA/TOA (Time Difference of Arrival / Time of Arrival) and TWR (Two Way Ranging).

5. The system (100) of any preceding claim, wherein at least one of the operator antenna ($P_0$) and the vehicle antenna ($Pi, P_2, ... P_n$) is an ultra-wideband (UWV) antenna, or the vehicle antenna ($P_1, P_2, ... P_n$) includes at least one of a laser sensor, a LED sensor, a LIDAR sensor, an infrared sensor, and an ultrasound sensor.

6. The system (100) of any preceding claim, wherein at least one of the operator antenna ($P_0$) and the vehicle antenna ($P_i$, $P_2$, ... $P_n$) is provided in one or more of an upper half of the operator's body, an operator's helmet, an operator's cap, an operator's hair band, an operator's vest, an article of clothing, an operator's harness, an operator's glove, an operator's bracelet, an operator's necklace, a refuse collecting vehicle cab, a refuse collecting vehicle body, and a refuse collecting vehicle tailgate.

7. The system (100) of any preceding claim, wherein the critical region (A) is one of at least one of a sphere, a cylinder, a spherical cap, a prism, a pyramid, and any intersections or combinations thereof.

8. The system (100) of any preceding claim, wherein the critical region (A) is a three dimensional space.

9. The system (100) of any preceding claim, wherein the critical region is considered to be unsafe when the operator in said region is under poor visibility conditions.

10. The system (100) of any preceding claim, wherein the critical region (A) is defined within a vehicle cab, which is considered to be safe when at least one part of the operator is in said region .

11. A method for controlling security in garbage collection through a system (100) according to any preceding claim, the method comprising:

    - providing at least one operator antenna ($P_0$) to an operator (O);
    - providing at least one vehicle antenna ($P_1$, $P_2$, ... $P_n$) in a refuse collecting vehicle (V);
    - determining at least one position ($x_0$, $y_0$, $z_0$) of the operator antenna ($P_0$);
    - determining at least one position [($x_1$, $y_1$, $z_1$), ($x_2$, $y_2$, $z_2$) ... ($x_n$, $y_n$, $z_n$)] of at least one corresponding vehicle antenna ($P_i$, $P_2$, ... $P_n$);
    - determining a critical region (A) defined by said position [($x_1$, $y_1$, $z_1$), ($x_2$, $y_2$, $z_2$), ... ($x_n$, $y_n$, $z_n$)] of the vehicle antenna ($P_1$, $P_2$, ... $P_n$); and
    - determining at least one action to be performed based on the relative position of the operator antenna ($P_0$) with respect to the critical region (A) based on at least one of:

        - a distance (d) from a position ($x_0$, $y_0$, $z_0$) of the operator antenna ($P_0$) to at least one line (i) passing through positions [($x_1$, $y_1$, $z_1$), ($x_2$, $y_2$, $z_2$)... ($x_n$, $y_n$, $z_n$)] of the vehicle antenna ($P_1$, $P_2$, ... $P_n$); and
        - a distance ($D_i$, $D_2$, ... $D_n$) from the position ($x_0$, $y_0$, $z_0$) of the operator antenna ($P_0$) to at least one of said positions [($x_1$, $y_1$, $z_1$), ($x_2$, $y_2$, $z_2$)... ($x_n$, $y_n$, $z_n$)] of the vehicle antenna

($P_1$, $P_2$, ... $P_n$).

12. The method of claim 11, wherein said at least one action to be performed is determined when it is considered that the operator antenna ($P_0$) is at least in part within the critical region (A).

13. The method of claim 11 or 12, wherein the action to be performed comprises at least one of:

    - outputting at least one command for enabling or disabling at least one mechanism in the refuse collecting vehicle (V), and
    - outputting at least one signal informing that operator (O) must remain within or move away from the critical region (A).

14. The method of any of the claims 11-13, wherein determining at least one position ($x_0$, $y_0$, $z_0$) of the operator antenna ($P_0$) with respect to a position [($x_1$, $y_1$, $z_1$), ($x_2$, $y_2$, $z_2$), ... ($x_n$, $y_n$, $z_n$)] of the vehicle antenna ($P_i$, $P_2$, ... $P_n$) is based on a prediction of a position ($x_0$, $y_0$, $z_0$) of the operator antenna ($P_0$) determined through recursive estimates of operator's positions ($P_{01}$, $P_{02}$, $P_{03}$...$P_{0n}$) at different time intervals ($t_{01}$, $t_{02}$, $t_{03}$... $t_{0n}$).

15. The method of any of the claims 11-14, wherein the action to be performed comprises at least one of allowing or preventing the vehicle (V) from travelling forward and/or backwards and enabling or disabling at least one mechanism in the refuse collecting vehicle (V), when the critical region (A) has been determined to be safe or unsafe, respectively.

**Amended claims in accordance with Rule 137(2) EPC.**

1. A garbage collecting security control system (100), comprising:

    - at least one operator antenna ($P_0$) to be associated with an operator (O);
    - at least two vehicle antennas ($P_1$, $P_2$, ... $P_n$) to be provided in a refuse collecting vehicle (V) and which communicate with the operator antenna ($P_0$);
    - at least one control unit to be connected to the operator antenna ($P_0$) and the vehicle antennas ($P_1$, $P_2$, ... $P_n$) and configured for at least determining:

        - at least one position ($x_0$, $y_0$, $z_0$) of the operator antenna ($P_0$) with respect to a position [($x_1$, $y_1$, $z_1$), ($x_2$, $y_2$, $z_2$), ... ($x_n$, $y_n$, $z_n$)] of the vehicle antennas ($P_1$, $P_2$, ... $P_n$);
        - a critical region (A) defined by said position [($x_1$, $y_1$, $z_1$), ($x_2$, $y_2$, $z_2$), ... ($x_n$, $y_n$, $z_n$)] of the

vehicle antennas $(P_1, P_2, ... P_n)$; and for
- at least one action to be performed based on the relative position of the operator antenna $(P_0)$ with respect to the critical region (A) based on at least one of:

- a distance (d) from a position $(x_0, y_0, z_0)$ of the operator antenna $(P_0)$ to at least one line (i) passing through positions $[(x_1, y_1, z_1), (x_2, y_2, z_2)... (x_n, y_n, z_n)]$ of the vehicle antennas $(P_1, P_2, ... P_n)$; and
- a distance $(D_1, D_2, ... D_n)$ from the position $(x_0, y_0, z_0)$ of the operator antenna $(P_0)$ to at least one of said positions $[(x_1, y_1, z_1), (x_2, y_2, z_2)... (x_n, y_n, z_n)]$ of the vehicle antennas $(P_1, P_2, ... P_n)$

**characterized in that**

at least one of the operator antenna $(P_0)$ and the vehicle antennas $(P_1, P_2, ... P_n)$ is an ultra-wideband (UWV) antenna;
**in that** said critical region (A) defined by the respective positions $[(x_1, y_1, z_1), (x_2, y_2, z_2)... (x_n, y_n, z_n)]$ of the vehicle antennas $(P_1, P_2, ... P_n)$ is a three-dimensional region selected from one of more of a cylindrical, spherical, prismatic, and pyramidal volume, or any intersection thereof; and
**in that** said control unit is configured for determining positions $[(x_0, y_0, z_0), (x_1, y_1, z_1), (x_2, y_2, z_2), ... (x_n, y_n, z_n)]$ of the operator and vehicle antennas $(P_0, P_1, P_2, ... P_n)$ through a distance (r) of each antenna $(P_0, P_1, P_2, ... P_n)$ from a coordinate origin and an angle $(\theta)$ from an axis (x), and
**in that** at least one of said distance (d) from a position $(x_0, y_0, z_0)$ of the operator antenna $(P_0)$ to at least one line (i) passing through positions $[(x_1, y_1, z_1), (x_2, y_2, z_2)... (x_n, y_n, z_n)]$ of the vehicle antennas $(P_1, P_2, ... P_n)$ and said distance $(D_1, D_2, ... D_n)$ from the position $(x_0, y_0, z_0)$ of the operator antenna $(P_0)$ to at least one of said positions $[(x_1, y_1, z_1), (x_2, y_2, z_2)... (x_n, y_n, z_n)]$ of the vehicle antennas $(P_1, P_2, ... P_n)$ is measured through at least one of ToF (Time of Flight), TDOA/TOA (Time Difference of Arrival / Time of Arrival) and TWR (Two Way Ranging).

2. The system (100) of claim 1, wherein said at least one action to be performed is determined when it is considered that the operator antenna $(P_0)$ is at least in part within the critical region (A).

3. The system (100) of claim 1 o 2, wherein the action to be performed comprises one or more of:

- outputting at least one command for enabling or disabling at least one mechanism in the refuse collecting vehicle (V), and
- outputting at least one signal informing that operator (O) must remain within or move away from the critical region (A).

4. The system (100) of any preceding claim, wherein the vehicle antennas $(P_1, P_2, ... P_n)$ include at least one of a laser sensor, a LED sensor, a LIDAR sensor, an infrared sensor, and an ultrasound sensor.

5. The system (100) of any preceding claim, wherein at least one of the operator antenna $(P_0)$ and the vehicle antennas $(P_1, P_2, ... P_n)$ is provided in one or more of an upper half of the operator's body, an operator's helmet, an operator's cap, an operator's hair band, an operator's vest, an article of clothing, an operator's harness, an operator's glove, an operator's bracelet, an operator's necklace, a refuse collecting vehicle cab, a refuse collecting vehicle body, and a refuse collecting vehicle tailgate.

6. The system (100) of any preceding claim, wherein the critical region (A) is one of at least one of a sphere, a cylinder, a spherical cap, a prism, a pyramid, and any intersections or combinations thereof.

7. The system (100) of any preceding claim, wherein the critical region is considered to be unsafe when the operator in said region is under poor visibility conditions.

8. The system (100) of any preceding claim, wherein the critical region (A) is defined within a vehicle cab, which is considered to be safe when at least one part of the operator is in said region .

9. A method for controlling security in garbage collection through a system (100) according to any preceding claim, the method comprising:

- providing at least one operator antenna $(P_0)$ to an operator (O);
- providing at least two vehicle antennas $(P_1, P_2, ... P_n)$ in a refuse collecting vehicle (V);
- determining at least one position $(x_0, y_0, z_0)$ of the operator antenna $(P_0)$;
- determining at least one position $[(x_1, y_1, z_1), (x_2, y_2, z_2) ... (x_n, y_n, z_n)]$ of at least one corresponding vehicle antennas $(P_1, P_2, ... P_n)$;
- determining a critical region (A) defined by said position $[(x_1, y_1, z_1), (x_2, y_2, z_2), ... (x_n, y_n, z_n)]$ of the vehicle antennas $(P_1, P_2, ... P_n)$; and
- determining at least one action to be performed based on the relative position of the operator antenna $(P_0)$ with respect to the critical region (A) based on at least one of:

- a distance (d) from a position $(x_0, y_0, z_0)$ of the operator antenna $(P_0)$ to at least one line (i) passing through positions $[(x_1, y_1, z_1), (x_2, y_2, z_2)... (x_n, y_n, z_n)]$ of the vehicle antennas $(P_1, P_2, ... P_n)$; and
- a distance $(D_1, D_2, ... D_n)$ from the position $(x_0, y_0, z_0)$ of the operator antenna $(P_0)$ to at least one of said positions $[(x_1, y_1, z_1), (x_2, y_2, z_2)... (x_n, y_n, z_n)]$ of the vehicle antennas $(P_1, P_2, ... P_n)$.

10. The method of claim 9, wherein said at least one action to be performed is determined when it is considered that the operator antenna $(P_0)$ is at least in part within the critical region (A).

11. The method of claim 9 or 10, wherein the action to be performed comprises at least one of:

- outputting at least one command for enabling or disabling at least one mechanism in the refuse collecting vehicle (V), and
- outputting at least one signal informing that operator (O) must remain within or move away from the critical region (A).

12. The method of any of the claims 9-11, wherein determining at least one position $(x_0, y_0, z_0)$ of the operator antenna $(P_0)$ with respect to a position $[(x_1, y_1, z_1), (x_2, y_2, z_2), ... (x_n, y_n, z_n)]$ of the vehicle antennas $(P_1, P_2, ... P_n)$ is based on a prediction of a position $(x_0, y_0, z_0)$ of the operator antenna $(P_0)$ determined through recursive estimates of operator's positions $(P_{01}, P_{02}, P_{03}...P_{0n})$ at different time intervals $(t_{01}, t_{02}, t_{03}...t_{0n})$.

13. The method of any of the claims 9-12, wherein the action to be performed comprises at least one of allowing or preventing the vehicle (V) from travelling forward and/or backwards and enabling or disabling at least one mechanism in the refuse collecting vehicle (V), when the critical region (A) has been determined to be safe or unsafe, respectively.

FIG. 1

EP 4 782 363 A1

## FIG. 2

## FIG. 3

Europäisches
Patentamt

European
Patent Office

Office européen
des brevets

# EUROPEAN SEARCH REPORT

**Application Number**

EP 25 38 2045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | JP 2021 050061 A (SHIN MEIWA IND CO LTD) 1 April 2021 (2021-04-01) | 1-9, 11-13,15 | INV. B65F3/00 |
| Y | * paragraphs [0026] - [0030], [0033] - | 14 | F16P3/14 |
| A | [0057]; figures 1-6 * | 10 | |
| | ----- | | |
| X | JP 2006 036466 A (MORITA ECONOS CORP) 9 February 2006 (2006-02-09) | 1-4,6, 11-13,15 | |
| | * paragraphs [0016] - [0019]; figure 1 * | | |
| | ----- | | |
| Y | WO 2023/106436 A1 (SAM NEONG [KR]) 15 June 2023 (2023-06-15) | 14 | |
| A | * the whole document * | 1 | |
| | ----- | | |

|  |
|---|
| **TECHNICAL FIELDS SEARCHED (IPC)** |
| B65F F16P |

The present search report has been drawn up for all claims

| Place of search | Date of completion of the search | Examiner |
|---|---|---|
| The Hague | 30 June 2025 | de Miscault, Xavier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................................

& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 25 38 2045

30-06-2025

| Patent document cited in search report | Publication date | Patent family member(s) | Publication date |
|---|---|---|---|
| JP 2021050061 A | 01-04-2021 | JP 7272920 B2 <br> JP 2021050061 A | 12-05-2023 <br> 01-04-2021 |
| JP 2006036466 A | 09-02-2006 | NONE | |
| WO 2023106436 A1 | 15-06-2023 | KR 20230084946 A <br> WO 2023106436 A1 | 13-06-2023 <br> 15-06-2023 |

For more details about this annex : see Official Journal of the European Patent Office, No. 12/82

**REFERENCES CITED IN THE DESCRIPTION**

**Patent documents cited in the description**

- JP 2007204276 A
- WO 2023106435 A1
- WO 2023106436 A1
- JP 2005314059 A
- JP 2021050061 A
- JP 2020011840 A
- JP 2005067746 A